# FASCICULE DE BREVET EUROPEEN

(11) **EP 4 444 578 B1**
(45) Date de publication et mention de la délivrance du brevet: **21.01.2026**
(21) Numéro de dépôt: 22834907.2
(22) Date de dépôt: 07.12.2022
(51) Int. Cl.: B60Q 1/04, B60Q 1/26

(54) **DISPOSITIF LUMINEUX D'UN VÉHICULE AUTOMOBILE**
BELEUCHTUNGSEINRICHTUNG FÜR EIN KRAFTFAHRZEUG
LIGHTING DEVICE FOR A MOTOR VEHICLE

(30) Priorité: 08.12.2021 FR 2113155
(43) Date de publication de la demande: 16.10.2024
(73) Titulaire: Valeo Vision, 93012 Bobigny Cedex (FR)
(72) Inventeur: LE TOUMELIN, Remi, 93012 BOBIGNY CEDEX (FR); RASOLDIER, Nirina, 93012 BOBIGNY CEDEX (FR)
(74) Mandataire: Valeo Visibility
(86) Numéro de dépôt international: PCT/EP2022/084878
(87) Numéro de publication internationale: WO 2023/104934

(56) Documents cités:
- EP-A1- 2 241 478
- EP-A1- 3 501 893
- DE-A1- 3 802 104
- JP-A- H02 109 752
- JP-A- H02 127 138
- US-A- 2 804 539

## Description

L'invention concerne le domaine de l'éclairage automobile. Plus précisément, l'invention concerne le domaine de l'amortissement de choc subi par un dispositif d'éclairage de véhicule automobile.

Dans le domaine automobile, les dispositifs lumineux récents ont tendance à s'élargir, afin de participer pleinement à l'aspect esthétique du véhicule automobile, tant pour les projecteurs avant que pour les feux arrières. Un projecteur avant peut notamment désormais former une majeure partie voire la totalité de la calandre d'un véhicule automobile. Dès lors, la surface d'un dispositif lumineux susceptible de subir un impact ou un choc s'accroît.

Par ailleurs, dans le cadre d'une navigation semi-autonome ou autonome d'un véhicule automobile, il devient usuel d'intégrer dans un dispositif lumineux de ce véhicule un ou plusieurs capteurs susceptibles d'acquérir des informations relatives à l'environnement du véhicule. Dès lors, le prix d'un tel dispositif lumineux s'accroît et les frais de remplacement en cas de dommages causés par un impact ou un choc deviennent prohibitifs. En outre, les différents éléments contenus dans le dispositif lumineux, qu'il s'agisse des modules lumineux ou des capteurs, requièrent un réglage précis. Ainsi, un simple impact ou un contact accidentel sur le dispositif lumineux peut perturber ce réglage de sorte qu'une réparation soit alors nécessaire.

Un dispositif lumineux de véhicule comportant un boîtier mobile par rapport à une platine et au moins un ressort permettant de rappeler le boîtier vers une position de repos est connu de DE 38 02 104 A1.

Il existe ainsi un besoin pour un dispositif lumineux capable d'encaisser ou d'amortir un choc ou un impact sans que cela ne perturbe l'agencement interne et le réglage des différents éléments qu'il contient.

Ce besoin s'exprime en particulier dans le cadre d'une navigation semi-autonome ou autonome, l'intelligence du véhicule pouvant provoquer des contacts réguliers entre son ou ses dispositifs lumineux et des obstacles lors de manaeuvres du véhicule. L'amortissement de ces chocs devra ainsi se faire de façon répétable sans impacter le réglage des différents éléments qu'il contient.

La présente invention se place ainsi dans ce contexte et vise à répondre à ce besoin.

A ces fins, l'invention a pour objet un dispositif lumineux d'un véhicule, comportant les caractéristiques de la revendication 1.

Dans l'invention, la platine forme ainsi une structure rigide via laquelle le boîtier est fixé au véhicule. Les organes de positionnement permettent alors d'assurer un positionnement isostatique du boîtier vis-à-vis de cette platine, lorsque le boîtier est dans sa position de repos. Lors d'un choc sur le dispositif lumineux, du fait de sa mobilité selon les au moins trois degrés de libertés, voire selon six degrés de liberté, le dispositif lumineux peut alors reculer, quelle que soit la direction de ce choc. Ce recul permet ainsi d'amortir le choc et donc d'éviter d'endommager le module lumineux et les autres éléments éventuels prévus dans le boîtier. Une fois ce choc amorti, l'organe élastiquement déformable rappelle le boîtier vers la position de repos. Cette position de repos correspondant à une position isostatique du boîtier, on s'assure ainsi que le rappel vers la position de repos soit répétable.

On comprend que selon l'invention, la fonction des organes de positionnement est d'immobiliser le boîtier de manière stable dans la position de repos, en l'absence de choc. C'est-à-dire que ce positionnement est assuré au moins de façon isostatique mais que l'on peut également prévoir davantage d'organes de positionnement que nécessaire à ce positionnement isostatique, de sorte à avoir un positionnement hyperstatique. Par la suite dans cette demande, par commodité de rédaction, les termes « position isostatique » ou « position de repos isostatique » devra être considéré comme désignant la position ou la position de repos qui au minimum est isostatique au sens strict mais qui peut également être hyperstatique.

Avantageusement, le dispositif lumineux peut comporter au moins un capteur apte à détecter la présence d'un obstacle et éventuellement à estimer la position dudit obstacle vis-à-vis du véhicule automobile. Ledit capteur pourra par exemple comporter un capteur radar, un capteur lidar ou une caméra.

De préférence, le boîtier pourra comporter une ouverture obturée par une glace de protection, le boîtier et la glace définissant un volume clos dans lequel est agencé le module lumineux.

On entend par organe de guidage un organe agencé pour guider un organe de positionnement du boîtier, qui se serait éloigné de sa position de repos du fait d'un choc sur le dispositif lumineux de sa position et qui est rappelé par l'organe élastiquement déformable, vers cette position de repos dans laquelle cet organe de guidage et cet organe de positionnement sont en contact.

Un organe de guidage pourra par exemple être un renfoncement aménagé dans la platine, présentant par exemple une ou plusieurs parois d'appui, jointives ou opposées, avec laquelle ou lesquelles un organe de positionnement peut venir en contact. Le renfoncement pourra notamment présenter un profil en « V » ou un profil en « U ».

Un organe de positionnement pourra par exemple être un ergot s'étendant depuis le boîtier et présentant une surface périphérique via laquelle il peut venir en contact avec un organe de guidage. L'ergot pourra notamment présenter une forme cylindrique.

Avantageusement, la platine peut former un cadre entourant le boîtier, les organes de guidage étant agencés sur tout le pourtour du cadre. Le cadre pourra par exemple comporter une pluralité de montants, au moins un organe de guidage étant agencé sur chaque montant.

exemple, les organes de guidage longitudinaux peuvent définir un plan sensiblement vertical auquel est perpendiculaire un axe optique du dispositif lumineux. Dans ce cas, les organes de positionnement et de guidage longitudinaux permettent d'assurer une immobilisation du boîtier dans sa position de repos selon cet axe optique.

Si on le souhaite, le boîtier pourra comporter quatre organes de positionnement longitudinaux et quatre organes de guidage longitudinaux. Cette configuration est particulièrement adaptée dans le cas où le dispositif lumineux forme une majeure partie, voire la totalité de la calandre du véhicule automobile, les dimensions du dispositif lumineux permettant de d'identifier un plan passant approximativement par chacun des organes de guidage longitudinaux. Par exemple, on pourra envisager d'agencer deux organes de positionnement longitudinaux sur un montant supérieur de la platine et deux organes de positionnement longitudinaux sur un montant inférieur de la platine, ces organes étant superposés verticalement deux à deux.

Avantageusement, chacun desdits organes de guidage longitudinaux de la platine comporte un renfoncement formé dans la platine et pourvu d'une paroi d'appui, chacun desdits organes de positionnement longitudinaux comportant un ergot s'étendant à partir du boîtier dans le renfoncement de l'un des organes de guidage longitudinaux de sorte que, dans la position de repos du boîtier, une surface périphérique dudit ergot soit en contact avec la paroi d'appui de ce renfoncement. Par exemple, chaque renfoncement pourra présenter un profil en V et chaque ergot pourra présenter une forme cylindrique. De préférence, ladite paroi d'appui pourra être une paroi sensiblement normale à un axe optique du dispositif lumineux. En variante, ladite paroi d'appui pourra être une paroi oblique vis-à-vis d'un axe optique du dispositif lumineux.

Avantageusement, au moins deux organes de positionnement longitudinaux sont également des organes de positionnement latéraux, et au moins deux organes de guidage longitudinaux sont également des organes de guidage latéraux, ces organes de positionnement et de guidage étant dits doubles. Le cas échéant, le renfoncement de chaque organe de guidage double est pourvu de deux parois d'appui jointives, et l'ergot de chaque organe de positionnement double s'étend à partir du boîtier dans l'un desdits renfoncements des organes de guidage doubles de sorte que, dans la position de repos du boîtier, la surface périphérique de cet ergot soit en contact avec les deux parois d'appuis jointives de ce renfoncement. Dans ce mode de réalisation, les organes de positionnement et les organes de guidage doubles participent ainsi à l'immobilisation du boîtier dans sa position de repos tant selon l'axe optique du dispositif lumineux que selon un axe horizontal perpendiculaire à cet axe optique.

Avantageusement, les parois d'appui jointives d'un renfoncement pourront faire un angle de sensiblement 90° entre elles. Le cas échéant, le renfoncement pourra présenter un profil en V. De préférence, la hauteur de l'ergot de chaque organe de positionnement double pourra être sensiblement supérieure à celle du renfoncement de l'organe de guidage double dans lequel il s'étend, de sorte qu'ils forment ensemble une liaison de type centrage court. On augmente ainsi la capacité du boîtier à se mouvoir selon plusieurs directions, voire de réaliser des trajectoires complexes.

Si on le souhaite, chaque organe de guidage double pourra comporter deux dents s'étendant de part et d'autre de son renfoncement.

Avantageusement, chacun desdits organes de guidage verticaux de la platine comporte un renfoncement formé dans la platine et pourvu de deux parois d'appui opposées et chacun desdits organes de positionnement verticaux comporte un ergot s'étendant à partir du boîtier dans le renfoncement d'un organe de guidage vertical de sorte que, dans la position de repos du boîtier, une surface périphérique dudit ergot soit en contact avec les parois d'appui opposées dudit renfoncement.

Le cas échéant, le renfoncement de chaque organe de guidage vertical pourra présenter un profil en U, les parois d'appui opposées de ce renfoncement étant sensiblement parallèles entre elles et étant normales à un axe sensiblement vertical. De préférence, chaque organe de positionnement vertical et l'organe de guidage vertical avec lequel il coopère pourront former ensemble une liaison de type centrage court.

Dans un mode de réalisation de l'invention, la platine comporte au moins une butée montée au droit d'un des organes de guidage et le ou chaque organe élastiquement déformable comporte un ressort fixé sur l'un des organes de positionnement et coopérant avec la ou l'une desdites butées de la platine. Selon un exemple non limitatif, la platine pourra comporter quatre butées montées chacune au droit de l'un des organes de guidage longitudinaux et doubles et le dispositif lumineux pourra comporter quatre organes élastiquement déformables comportant chacun un ressort fixé sur l'un des organes de guidage longitudinaux et doubles.

Avantageusement, le ressort comporte un ressort de torsion enroulé sur ledit organe de positionnement et deux bras s'étendant chacun à partir de l'une des branches dudit ressort de torsion, chaque bras venant au contact d'une face latérale de la butée. De préférence, lesdits bras viendront au contact de la face latérale de part et d'autre de la butée. Le recul du boîtier vis-à-vis de la platine, sous l'effort d'un contact exercé sur le dispositif lumineux, vient ainsi provoquer un déplacement des bras, du fait du contact avec la butée, et donc une déformation du ressort de torsion provoquant ainsi le rappel du boîtier vers sa position de repos. Par ailleurs, le ressort de torsion forme une charnière permettant le pivotement du boîtier vis-à-vis de la platine autour d'un axe passant par cet organe de positionnement, notamment en l'absence d'une sollicitation de ce ressort de torsion.

Avantageusement, chaque bras s'étend depuis l'une des branches du ressort en faisant un angle avec cette branche de sorte que les bras se croisent. De la sorte, les bras se croisent derrière la butée, le ressort étant ainsi verrouillé sur cette butée. Si on le souhaite, chaque bras pourra s'étendre depuis sa branche selon un angle tel que les bras fassent un angle entre eux sensiblement égal à 45°.

Avantageusement toujours, ladite face latérale de la butée présente un profil définissant une came coopérant avec chacun desdits bras. Cette came permet d'une part de définir un seuil de rétention du ressort et d'autre part de moduler l'effort de recul du boîtier.

Par exemple, la came pourra être agencée pour que le ressort de torsion subisse une déformation seulement si un effort supérieur à un seuil donné est exercé sur le boîtier. Ce seuil de rétention permet d'éviter des déplacements du boîtier vis-à-vis de la platine qui seraient susceptibles d'être causés par des vibrations dues au déplacement du véhicule automobile.

De façon alternative ou cumulative, la came est agencée pour que l'évolution de l'angle entre les bras du ressort provoqué par un effort exercé sur le boîtier soit non linéaire. En d'autres termes, la déformation du ressort de torsion, et donc la force de rappel exercée par ce ressort n'est pas linéaire et il est possible de contrôler la façon dont le boîtier recule vis-à-vis de la platine et est rappelé vers sa position de repos. On pourra par exemple déterminer un profil de came permettant un recul important du boîtier en début de course puis plus faible à l'approche de la fin de course. En variante, on pourra par exemple déterminer un profil de came limitant le recul du boîtier en début de course pour ensuite autoriser un recul plus important à l'approche de la fin de course.

Si on le souhaite, la face latérale de la butée peut comporter un rebord contre lequel vien-nent en appui lesdits bras du ressort. Le rebord pourra s'étendre, de façon continue ou discontinue, sur tout ou partie du pourtour de la face latérale.

Avantageusement, l'extrémité de chacun des bras est recourbée pour former un crochet. Ce crochet vient ainsi contre la butée lors de l'écartement du bras pour définir une position de fin de course du ressort. De préférence, le profil du crochet pourra être agencé pour épouser le profil de la face latérale de la butée.

Le dispositif lumineux selon l'invention peut être tout dispositif lumineux de véhicule, notamment un projecteur avant (encore appelé phare de véhicule), un feu arrière, un feu latéral ou répétiteur, une grille avant illuminée, un panneau lumineux agencé sur la face avant ou arrière du véhicule.

Un autre objet de l'invention est un véhicule comprenant un dispositif lumineux selon l'invention, la platine étant fixée par lesdits organes de fixation au châssis du véhicule et/ou à la carrosserie du véhicule.

La présente invention est maintenant décrite à l'aide d'exemples uniquement illustratifs et nullement limitatifs de la portée de l'invention, et à partir des dessins annexés, dessins sur lesquels les différentes figures représentent :

[Fig. 1] représente, schématiquement et partiellement, une vue arrière d'un dispositif lumineux selon un mode de réalisation de l'invention ;

[Fig. 2] représente, schématiquement et partiellement, une vue de dessus du dispositif lumineux de la [Fig. 1] ;

[Fig. 3] représente, schématiquement et partiellement, une vue de côté du dispositif lumineux de la [Fig. 1] ;

[Fig. 4] représente, schématiquement et partiellement, un exemple de réalisation d'un organe élastiquement déformable employé dans le dispositif lumineux de la [Fig. 1].

Dans la description qui suit, les éléments identiques, par structure ou par fonction, apparaissant sur différentes figures conservent, sauf précision contraire, les mêmes références. En outre, les termes « longitudinal », « latéral », « vertical », « avant », « arrière », « haut » et « bas » doivent être interprétés dans le contexte de l'orientation du dispositif lumineux tel qu'il a été représenté, correspondant à une utilisation normale du dispositif lumineux, comme par exemple lorsqu'il est monté dans un véhicule automobile.

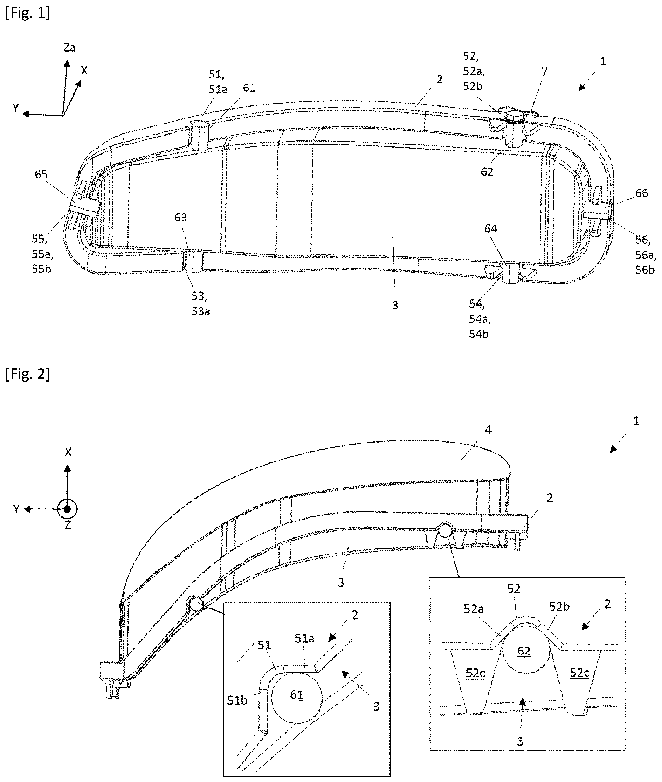

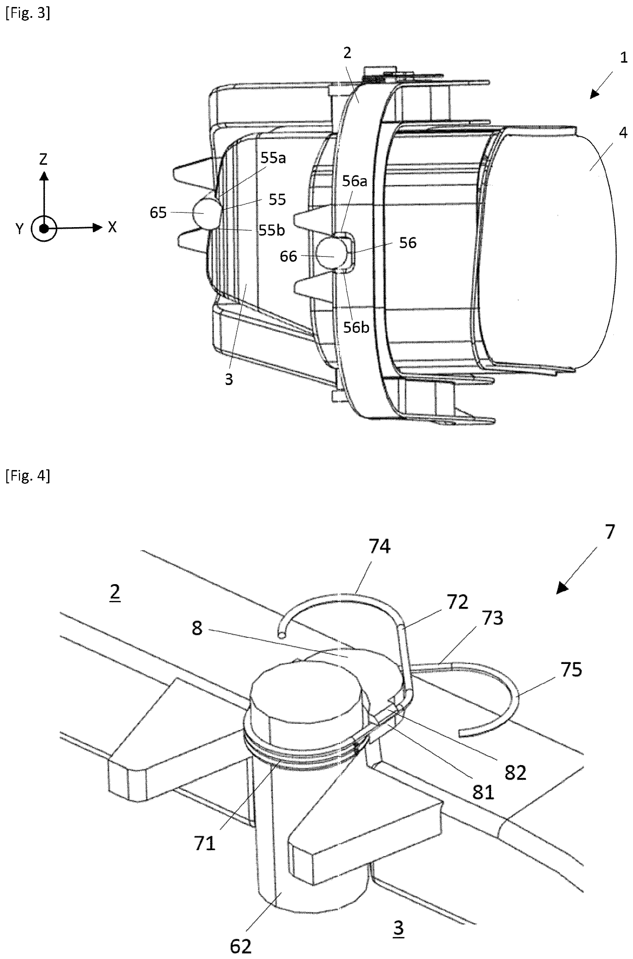

On a représenté en [Fig. 1] un dispositif lumineux 1 d'un véhicule automobile selon un mode de réalisation de l'invention. La [Fig. 2] représente une vue de dessus du dispositif lumineux 1 et la [Fig. 3] représente une vue de côté du dispositif lumineux 1.

Dans l'exemple décrit, le dispositif lumineux 1 est agencé en un projecteur avant gauche d'un véhicule automobile.

Le dispositif lumineux 1 comporte une platine 2 comprenant des organes de fixation (non représentés) du dispositif lumineux 1 à un châssis du véhicule. Ces organes de fixation pourront par exemple être constitués d'une pluralité de pattes de fixation s'étendant depuis la platine 2 et destinées à être vissées en une pluralité de points de fixation du châssis.

Le dispositif lumineux 1 comporte également un boîtier 3 fermé par une glace de protection 4, définissant un volume clos à l'intérieur duquel sont agencés une pluralité de modules lumineux (non représentés) et un capteur, par exemple de type lidar, apte à détecter la présence d'un obstacle et éventuellement à estimer la position dudit obstacle vis-à-vis du véhicule automobile. Le dispositif lumineux 1 présente ainsi un axe optique X, défini par la direction globale d'émission des modules lumineux agencés dans le boîtier 3. Le boîtier 3 s'étend par ailleurs transversalement selon un axe Y et verticalement selon un axe Z. On a ainsi rapporté ces axes X, Y et Z sur chacune des [Fig. 1] à [Fig. 3].

La platine 2 forme un cadre au travers duquel passe le boîtier 3, ce cadre formant une structure rigide via laquelle le boîtier 3 est fixé au véhicule lumineux. Le boîtier 3 est monté mobile, selon au moins trois degrés de liberté, sur la platine 2, de sorte qu'un contact sur la glace 4 puisse entraîner un recul du boîtier vis-à-vis de la platine 2, selon une translation et/ou une rotation quelconque. Le dispositif lumineux 1 est toutefois équipé d'une pluralité d'organes élastiquement déformables par lesquels le boîtier 3 est relié à la platine 2, de sorte que le boîtier 3 puisse être rappelé vers une position de repos isostatique vis-à-vis de la platine.

Afin de définir cette position de repos isostatique, la platine 2 comporte six organes de guidage 51 à 56, répartis sur tout le pourtour du cadre. Deux organes 51 et 52 sont agencés sur un montant supérieur 21 de la platine 2, deux organes 53 et 54 sont agencés sur un montant inférieur 22 de la platine 2, et deux organes 55 et 56 sont agencés chacun sur un montant latéral 23, respectivement 24, de la platine 2. La [Fig. 2] fait apparaître des grossissements des organes 51 et 52.

Les organes de guidage 51 à 54 sont des organes de guidage longitudinaux comportant chacun un renfoncement aménagé dans une paroi arrière de la platine 2. Les organes de guidage 52 et 54 sont également des organes de guidage latéraux, ces organes étant ainsi dits doubles.

Les renfoncements des organes 51 et 53 présentent un profil en V et sont pourvus à cet effet d'une paroi d'appui 51a, respectivement 53a, verticale et sensiblement normale à l'axe optique X. Le renfoncement de l'organe 51 est verticalement superposé avec le renfoncement de l'organe 53.

Les renfoncements des organes 52 et 54 présentent également un profil en V et sont pourvus à cet effet de deux parois d'appui 52a et 52b, respectivement 54a et 54b, jointives, faisant entre elles un angle de sensiblement 90°, et s'étendant chacune verticalement et de façon oblique à l'axe optique X. Le renfoncement de l'organe 52 est verticalement superposé avec le renfoncement de l'organe 54.

Les organes de guidage double 52 et 54 comportent par ailleurs chacun deux dents 52c, prolongeant les parois d'appui de leur renfoncement.

Les organes de guidage 55 et 56 sont des organes de guidage verticaux comportant chacun un renfoncement aménagé dans une paroi arrière de la platine 2. Chaque renfoncement présente un profil en U et est pourvu à cet effet de deux parois d'appui opposées 55a et 55b, respectivement 56a et 56b, parallèles entre elles et s'étendant chacune horizontalement en étant normales à l'axe Z. Les renfoncements sont également prolongés par des dents.

Pour coopérer avec ces organes de guidage et afin de définir la position de repos isostatique du boîtier 3, le boîtier 3 comporte six organes de positionnement 61 à 66.

Chaque organe de positionnement 61 à 66 comporte un ergot de forme cylindrique s'étendant depuis une paroi périphérique du boîtier et présentant une surface périphérique via laquelle il peut venir en contact avec l'un des organes de guidage 51 à 56. Les ergots sont ainsi répartis sur la paroi périphérique du boîtier de façon similaire aux renfoncements des organes de guidage 51 à 56. Les organes de positionnement 61 et 63 sont donc des organes de positionnement longitudinaux, les organes de positionnement 62 et 64 sont des organes de positionnement doubles, à savoir longitudinaux et transversaux, et les organes de positionnement 65 et 66 sont des organes de positionnement verticaux.

Les organes de guidage et les organes de positionnement, lorsqu'ils sont en contact, forment ainsi des liaisons entre le boîtier 3 et la platine 2 définissant une position isostatique du boîtier 3 sur la platine 2.

Plus précisément, chacun des ergots des organes de positionnement longitudinaux et doubles 61 à 64 est apte à venir au contact avec la ou les parois d'appui de l'un des organes de guidage longitudinaux 51 à 54 de sorte que le boîtier 3 soit, dans sa position de repos, en appui plan contre la platine 2, selon un plan sensiblement vertical et normal à l'axe optique X du dispositif lumineux. Cette liaison permet d'assurer une immobilisation du boîtier 3 dans sa position de repos selon cet axe optique X.

Chacun des ergots des organes de positionnement doubles 62 et 64 est par ailleurs apte à venir au contact avec les parois d'appui de l'un des organes de guidage doubles 52 et 54 de sorte que le boîtier 3 soit, dans sa position de repos, en liaison linéaire rectiligne avec la platine 2, selon une direction sensiblement verticale. Cette liaison permet d'assurer une immobilisation du boîtier 3 dans sa position de repos selon l'axe Y.

Chacun des ergots des organes de positionnement verticaux 65 et 66 est apte à venir au contact avec les parois d'appui de l'un des organes de guidage verticaux 55 et 56 de sorte que le boîtier soit, dans sa position de repos, en liaison glissière avec la platine, selon une direction sensiblement horizontale parallèle à l'axe Y. Cette liaison permet d'assurer une immobilisation du boîtier 3 dans sa position de repos selon l'axe Z.

On notera que pour les renfoncements des organes de guidage 51 et 53, lorsque l'ergot de l'organe de positionnement 61 et 63 est en contact avec la surface d'appui 51a, respectivement 53a de ce renfoncement, il existe un jeu entre une deuxième paroi 51b du profil en « V » de ce renfoncement et cet ergot. Par ailleurs, la hauteur de l'ergot de chaque organe de positionnement double 62 et 64 est sensiblement supérieure à celle du renfoncement de l'organe de guidage double 52 et 54 associé, de sorte qu'ils forment ensemble une liaison de type centrage court. Les ergots des organes de positionnement verticaux 65 et 66 sont également dimensionnés pour former un centrage court avec les renfoncements associés. Le boîtier 3 peut ainsi se mouvoir selon plusieurs directions et peut emprunter des trajectoires complexes, sans risquer de provoquer des contraintes de déformation fortes sur le boîtier 3.

Afin de permettre le rappel du boîtier 3 vers sa position de repos, le dispositif lumineux 1 comporte quatre organes élastiquement déformables 7 reliant le boîtier 3 à la platine 2. La platine 2 comporte quatre butées 8, prévues chacune au droit de l'un des organes de guidage 51 à 54 et chaque organe élastiquement déformable 7 comporte un ressort fixé sur l'un des organes de positionnement 61 à 64 et coopérant avec l'une desdites butées 8 de la platine.

Dans les [Fig. 1] à [Fig. 3], un seul de ces organes 7 et une seule de ces butées 8 ont été représentés, à des fins de clarté, étant entendu que ces organes et ces butées sont identiques et que la description qui va être faite de cet organe 7 et de cette butée 8, en lien avec la [Fig. 4], est applicable à tous les autres.

Le ressort comporte un ressort de torsion 71 enroulé sur l'ergot de l'organe de positionnement 62 et deux bras 72 et 73 s'étendant chacun à partir de l'une des branches dudit ressort de torsion.

Chaque bras 72 et 73 vient au contact d'une face latérale 81 de la butée 8, de part et d'autre de la butée.

Chaque bras 72 et 73 s'étend en faisant un angle avec le ressort 71 de sorte que les bras se croisent, derrière la butée, en faisant un angle entre eux sensiblement égal à 45°.

Le recul du boîtier 3 vis-à-vis de la platine 2, sous l'effort d'un contact exercé sur la glace 4, vient ainsi provoquer un écartement des bras 72 et 73, du fait du contact avec la butée 8, et donc une déformation du ressort de torsion 71 provoquant ainsi le rappel du boîtier 3 vers sa position de repos.

La face latérale 81 de la butée 8 présente un profil définissant une came coopérant avec chacun desdits bras 72 et 73. Cette came est agencée d'une part pour que le ressort de torsion 71 subisse une déformation seulement si un effort supérieur à un seuil donné est exercé sur le boîtier 3. D'autre part, la came est agencée pour que l'évolution de l'angle entre les bras 72 et 73 soit non linéaire avec un effort exercé sur le boîtier. En d'autres termes, il est possible de contrôler la façon dont le boîtier recule vis-à-vis de la platine et est rappelé vers sa position de repos.

La face latérale 81 de la butée 8 comporte un rebord 82 contre lequel viennent en appui les bras 72 et 73.

Enfin, l'extrémité de chacun des bras 72 et 73 est recourbée pour former un crochet 74 et 75 venant contre la butée 8 pour épouser le profil de la face latérale 81 et définir une position de fin de course du ressort.

La description qui précède explique clairement comment l'invention permet d'atteindre les objectifs qu'elle s'est fixée, à savoir obtenir un dispositif lumineux capable d'amortir de façon répétable un choc, quelle que soit la direction de ce choc, sans risquer d'endommager ou de dérégler les différents composants qu'il contient , en permettant au boîtier de ce dispositif lumineux de reculer sous l'effet du choc puis en rappelant le boîtier vers une position de repos isostatique.

En tout état de cause, l'invention ne saurait se limiter aux modes de réalisation spécifiquement décrits dans ce document, et s'étend en particulier à tous moyens équivalents et à toute combinaison techniquement opérante de ces moyens tels que définis par les revendications annexées.

Par ailleurs, la présente description détaillée est transposable à tout dispositif lumineux de véhicule dont le boîtier, tel que le boîtier 3, est monté dans une platine, tel que la platine 2. Ce dispositif lumineux peut notamment également être :
- un feu arrière, la platine étant destinée à être agencée à l'arrière de l'aile arrière, du haillon, ou à l'arrière sous le haillon du véhicule,
- un feu latéral ou répétiteur, la platine étant notamment destinée à être agencée dans une partie correspondante du châssis et/ou de la carrosserie du véhicule,
- une grille avant illuminée, la platine étant notamment destinée à être agencée sur la face avant du véhicule, une partie de la grille formant le boîtier selon l'invention,
- un panneau lumineux notamment agencé sur la face avant ou la face arrière du véhicule, notamment pour afficher de l'information, la platine étant notamment destinée à être agencée dans une partie correspondante du châssis et/ou de la carrosserie du véhicule. Dans ces différents cas, le boîtier étant agencé sur la platine similairement à ce qui est illustré.

## Revendications

1. Dispositif lumineux (1) d'un véhicule, comportant une platine (2) comprenant des organes de fixation du dispositif lumineux à un châssis du véhicule, un boîtier (3) et au moins un module lumineux agencé dans le boîtier, **caractérisé en ce que** la platine comporte des organes de guidage (51, 52, 53, 54, 55, 56), **en ce que** le boîtier comporte des organes de positionnement (61, 62, 63, 64, 65, 66), chaque organe de positionnement étant associé à l'un des organes de guidage en étant apte à venir au contact d'au moins un point de cet organe de guidage associé pour définir une position de repos du boîtier sur la platine, le boîtier étant monté mobile, selon au moins trois degrés de liberté, sur la platine par au moins un organe élastiquement déformable (7) apte à rappeler le boîtier vers ladite position de repos, **en ce que** le boîtier (3) comporte au moins trois organes longitudinaux (61, 62, 63, 64) de positionnement selon un axe longitudinal (X), **en ce que** la platine (2) comporte au moins trois organes longitudinaux (51, 52, 53, 54) de guidage selon l'axe longitudinal (X), et **en ce que** chacun desdits organes de positionnement longitudinaux est apte à venir au contact avec l'un des organes de guidage longitudinaux de sorte que les au moins trois organes de positionnement et de guidage longitudinaux forment, dans la position de repos, un appui plan du boîtier contre la platine selon un plan normal à l'axe longitudinal (X), **en ce que** le boîtier (3) comporte au moins deux organes latéraux (62, 64) de positionnement selon un axe latéral (Y) perpendiculaire à l'axe longitudinal (X), **en ce que** la platine (2) comporte au moins deux organes latéraux (52, 54) de guidage selon l'axe latéral (Y), et **en ce que** chacun desdits organes de positionnement latéraux est apte à venir au contact avec l'un des organes de guidage latéraux de sorte que les au moins deux organes de positionnement et de guidage latéraux forment, dans la position de repos, une liaison linéaire rectiligne entre le boîtier et la platine de direction normale suivant l'axe latéral (Y) et d'axe suivant un axe vertical (Z), l'axe vertical (Z) étant perpendiculaire à l'axe longitudinal (X) et à l'axe latéral (Y), **en ce que** le boîtier (3) comporte au moins deux organes verticaux (65, 66) de positionnement selon l'axe vertical (Z), **en ce que** la platine (2) comporte au moins deux organes verticaux (55, 56) de guidage selon l'axe vertical (Z), et **en ce que** chacun desdits organes de positionnement verticaux est apte à venir au contact avec un organe de guidage vertical de la platine de sorte que les au moins deux organes de positionnement et de guidage verticaux forment, dans la position de repos, une liaison glissière entre le boîtier et la platine orientée selon l'axe latéral (Y).

2. Dispositif lumineux (1) selon la revendication précédente, dans laquelle la platine (2) forme un cadre entourant le boîtier (3), les organes de guidage (51, 52, 53, 54, 55, 56) étant agencés sur tout le pourtour du cadre.

3. Dispositif lumineux (1) selon l'une des revendications précédentes, dans lequel chacun desdits organes de guidage longitudinaux (51, 52, 53, 54) de la platine (2) comporte un renfoncement formé dans la platine et pourvu d'une paroi d'appui (51a, 52a, 53a, 54a) et dans lequel chacun desdits organes de positionnement longitudinaux (61, 62, 63, 64) comporte un ergot s'étendant à partir du boîtier (3) dans le renfoncement de l'un des organes de guidage longitudinaux de sorte que, dans la position de repos du boîtier, une surface périphérique dudit ergot soit en contact avec la paroi d'appui de ce renfoncement.

4. Dispositif lumineux (1) selon la revendication 3, dans lequel au moins deux organes de positionnement longitudinaux (62, 64) sont également des organes de positionnement latéraux, dans lequel au moins deux organes de guidage longitudinaux (52, 54) sont également des organes de guidage latéraux, ces organes de positionnement et de guidage étant dits doubles, dans lequel le renfoncement de chaque organe de guidage double est pourvu de deux parois d'appui jointives (52a, 52b, 54a, 54b), et dans lequel l'ergot de chaque organe de positionnement double s'étend à partir du boîtier (3) dans l'un desdits renfoncements des organes de guidage double de sorte que, dans la position de repos du boîtier, la surface périphérique de cet ergot soit en contact avec les deux parois d'appuis jointives de ce renfoncement.

5. Dispositif lumineux (1) selon l'une des revendications précédentes, dans lequel chacun desdits organes de guidage verticaux (55, 56) de la platine (2) comporte un renfoncement formé dans la platine et pourvu deux parois d'appui (55a, 55b, 56a, 56b) opposées et dans lequel chacun desdits organes de positionnement verticaux (65, 66) comporte un ergot s'étendant à partir du boîtier (3) dans le renfoncement d'un organe de guidage vertical de sorte que, dans la position de repos du boîtier, une surface périphérique dudit ergot soit en contact avec les paroi d'appui opposées dudit renfoncement.

6. Dispositif lumineux (1) selon l'une des revendications précédentes, dans lequel la platine (2) comporte au moins une butée (8) montée au droit d'un des organes de guidage (51, 52, 53, 54, 55, 56) et dans lequel le ou chaque organe élastiquement déformable (7) comporte un ressort fixé sur l'un des organes de positionnement (61, 62, 63, 64, 65, 66) et coopérant avec la ou l'une desdites butées de la platine.

7. Dispositif lumineux (1) selon la revendication précédente, dans lequel le ressort comporte un ressort de torsion (71) enroulé sur ledit organe de positionnement (61, 62, 63, 64, 65, 66) et deux bras (72, 73) s'étendant chacun à partir de l'une des branches dudit ressort de torsion, chaque bras venant au contact d'une face latérale de la butée (8).

8. Véhicule comprenant un dispositif lumineux (1) selon l'une quelconque des revendications précédentes, la platine (2) étant fixée par lesdits organes de fixation au châssis du véhicule et/ou à la carrosserie du véhicule.

## Patentansprüche

1. Beleuchtungsvorrichtung (1) für ein Fahrzeug, umfassend eine Platte (2) mit Mitteln zum Befestigen der Beleuchtungsvorrichtung an einem Fahrzeugchassis, ein Gehäuse (3) und mindestens ein in dem Gehäuse angeordnetes Beleuchtungsmodul, **dadurch gekennzeichnet, dass** die Platte Führungsmittel (51, 52, 53, 54, 55, 56) umfasst, dass das Gehäuse Positionierungselemente (61, 62, 63, 64, 65, 66) umfasst, wobei jedes Positionierungselement einem der Führungselemente zugeordnet ist und mit mindestens einem Punkt auf diesem zugeordneten Führungselement in Kontakt kommen kann, um eine Ruheposition für das Gehäuse auf der Platte zu definieren, wobei das Gehäuse so montiert ist, dass es mit mindestens drei Freiheitsgraden auf der Platte durch mindestens ein elastisch verformbares Element (7) beweglich montiert ist, das das Gehäuse in die Ruheposition zurückbringen kann, dass das Gehäuse (3) mindestens drei Längselemente (61, 62, 63, 64) zur Positionierung entlang einer Längsachse (X) umfasst, dass die Platte (2) mindestens drei Längsführungselemente (51, 52, 53, 54) entlang der Längsachse (X) umfasst, und dass jedes der Längspositionierungselemente mit einem der Längsführungselemente in Kontakt kommen kann, so dass die mindestens drei Längspositionierungs- und Führungselemente in der Ruheposition eine flache Auflage für das Gehäuse gegen die Platte in einer Ebene senkrecht zur Längsachse (X) bilden, dass das Gehäuse (3) mindestens zwei seitliche Positionierungselemente (62, 64) entlang einer zur Längsachse (X) senkrechten Querachse (Y) aufweist, dass die Platte (2) mindestens zwei Querführungselemente (52, 54) entlang der Querachse (Y) aufweist und dass jedes der Querpositionierungselemente mit einem der Querführungselemente in Kontakt kommen kann, so dass die mindestens zwei Querpositionierungs- und Führungselemente in der Ruheposition eine gerade lineare Verbindung zwischen dem Gehäuse und der Lenkplatte senkrecht zur seitlichen Achse (Y) und Achse entlang einer vertikalen Achse (Z) bilden, wobei die vertikale Achse (Z) senkrecht zur Längsachse (X) und zur seitlichen Achse (Y) ist, dass das Gehäuse (3) mindestens zwei vertikale Positionierungselemente (65, 66) entlang der vertikalen Achse (Z) umfasst, dass die Platte (2) mindestens zwei vertikale Führungselemente (55, 56) entlang der vertikalen Achse (Z) umfasst und dass jedes der vertikalen Positionierungselemente mit einem vertikalen Führungselement der Platte in Kontakt kommen kann, sodass die mindestens zwei vertikalen Positionierungs- und Führungselemente in der Ruheposition eine Gleitverbindung zwischen dem Gehäuse und der Platte bilden, die entlang der seitlichen Achse (Y) ausgerichtet ist.

2. Beleuchtungsvorrichtung (1) nach dem vorstehenden Anspruch, wobei die Platte (2) einen das Gehäuse (3) umgebenden Rahmen bildet, wobei die Führungselemente (51, 52, 53, 54, 55, 56) um den gesamten Umfang des Rahmens angeordnet sind.

3. Beleuchtungsvorrichtung (1) nach einem der vorstehenden Ansprüche, wobei jedes der Längsführungselemente (51, 52, 53, 54) der Platte (2) eine in der Platte ausgebildete Aussparung umfasst, die mit einer Stützwand (51a, 52a, 53a, 54a) versehen ist, und wobei jedes der Längspositionierungselemente (61, 62, 63, 64) einen Vorsprung aufweist, der sich vom Gehäuse (3) in die Aussparung eines der Längsführungselemente erstreckt, so dass in der Ruheposition des Gehäuses eine Umfangsfläche des Vorsprungs mit der Stützwand dieser Aussparung in Kontakt steht.

4. Beleuchtungsvorrichtung (1) nach Anspruch 3, bei der mindestens zwei Längspositionierungselemente (62, 64) auch seitliche Positionierungselemente sind, bei der mindestens zwei Längsführungselemente (52, 54) auch seitliche Führungselemente sind, wobei diese Positionierungs- und Führungselemente als doppelt bezeichnet werden, wobei die Aussparung jedes doppelten Führungselements mit zwei aneinandergrenzenden Stützwänden (52a, 52b, 54a, 54b) versehen ist, und wobei sich der Vorsprung jedes doppelten Positionierungselements vom Gehäuse (3) in eine der Aussparungen der doppelten Führungselemente erstreckt, so dass in der Ruheposition des Gehäuses die Umfangsfläche dieses Vorsprungs mit den beiden aneinandergrenzenden Stützwänden dieser Aussparung in Kontakt steht.

5. Beleuchtungsvorrichtung (1) nach einem der vorstehenden Ansprüche, wobei jedes der vertikalen Führungselemente (55, 56) der Platte (2) eine in der Platte ausgebildete Aussparung umfasst, die mit zwei gegenüberliegenden Stützwänden (55a, 55b, 56a, 56b) aufweist, und wobei jedes der vertikalen Positionierungselemente (65, 66) einen Vorsprung aufweist, der sich vom Gehäuse (3) in die Aussparung eines vertikalen Führungselements erstreckt, so dass in der Ruheposition des Gehäuses eine Umfangsfläche des Vorsprungs mit den gegenüberliegenden Stützwänden der Aussparung in Kontakt steht.

6. Beleuchtungsvorrichtung (1) nach einem der vorstehenden Ansprüche, wobei die Platte (2) mindestens einen Anschlag (8) umfasst, der gegenüber einem der Führungselemente (51, 52, 53, 54, 55, 56) angebracht ist, und wobei das oder jedes elastisch verformbare Element (7) eine Feder umfasst, die an einem der Positionierungselemente (61, 62, 63, 64, 65, 66) befestigt ist und mit dem oder einem der Anschläge an der Platte zusammenwirkt.

7. Beleuchtungsvorrichtung (1) nach dem vorstehenden Anspruch, wobei die Feder eine Torsionsfeder (71) umfasst, die um das Positionierungselement (61, 62, 63, 64, 65, 66) gewickelt ist, sowie zwei Arme (72, 73), die sich jeweils von einem der Schenkel der Torsionsfeder erstrecken und jeweils mit einer Seitenfläche des Anschlags (8) in Kontakt kommen.

8. Fahrzeug mit einer Beleuchtungsvorrichtung (1) gemäß einem der vorstehenden Ansprüche, wobei die Platte (2) durch die Befestigungselemente am Fahrzeugchassis und/oder an der Fahrzeugkarosserie befestigt ist.

## Claims

1. Lighting device (1) for a vehicle, comprising a plate (2) including means for fixing the lighting device to a vehicle chassis, a housing (3) and at least one lighting module arranged in the housing, **characterised in that** the plate includes guide means (51, 52, 53, 54, 55, 56), **in that** the housing comprises positioning members (61, 62, 63, 64, 65, 66), each positioning member being associated with one of the guide members and being capable of coming into contact with at least one point on this associated guide member to define a rest position for the housing on the plate, the housing being mounted so as to be movable, according to at least three degrees of freedom, on the plate by at least one elastically deformable member (7) capable of returning the housing to said rest position, **in that** the housing (3) comprises at least three longitudinal members (61, 62, 63, 64) for positioning along a longitudinal axis (X), **in that** the plate (2) comprises at least three longitudinal guide members (51, 52, 53, 54) along the longitudinal axis (X), and **in that** each of said longitudinal positioning members is capable of coming into contact with one of the longitudinal guide members so that the at least three longitudinal positioning and guide members form, in the rest position, a flat support for the housing against the plate in a plane normal to the longitudinal axis (X) , **in that** the housing (3) comprises at least two lateral positioning members (62, 64) along a lateral axis (Y) perpendicular to the longitudinal axis (X), **in that** the plate (2) comprises at least two lateral guide members (52, 54) along the lateral axis (Y), and **in that** each of said lateral positioning members is capable of coming into contact with one of the lateral guide members so that the at least two lateral positioning and guide members form, in the rest position, a straight linear connection between the housing and the plate in a normal direction to the lateral axis (Y) and axis along a vertical axis (Z), the vertical axis (Z) being perpendicular to the longitudinal axis (X) and the lateral axis (Y), **in that** the housing (3) comprises at least two vertical positioning members (65, 66) along the vertical axis (Z), **in that** the plate (2) comprises at least two vertical guide members (55, 56) along the vertical axis (Z), and **in that** each of said vertical positioning members is capable of coming into contact with a vertical guide member of the plate so that the at least two vertical positioning and guide members form, in the rest position, a sliding connection between the housing and the plate oriented along the lateral axis (Y).

2. Lighting device (1) according to the preceding claim, wherein the plate (2) forms a frame surrounding the housing (3), the guide elements (51, 52, 53, 54, 55, 56) being arranged around the entire circumference of the frame.

3. Lighting device (1) according to one of the preceding claims, in which each of said longitudinal guide members (51, 52, 53, 54) of the plate (2) comprises a recess formed in the plate and provided with a support wall (51a, 52a, 53a, 54a), and wherein each of said longitudinal positioning members (61, 62, 63, 64) comprises a lug extending from the housing (3) into the recess of one of the longitudinal guide members so that, in the rest position of the housing, a peripheral surface of said lug is in contact with the support wall of this recess.

4. Lighting device (1) according to claim 3, in which at least two longitudinal positioning members (62, 64) are also lateral positioning members, in which at least two longitudinal guide members (52, 54) are also lateral guide members, these positioning and guide members being referred to as double, wherein the recess of each double guide member is provided with two adjoining support walls (52a, 52b, 54a, 54b), and wherein the lug of each double positioning member extends from the housing (3) into one of said recesses of the double guide members so that, in the rest position of the housing, the peripheral surface of this lug is in contact with the two adjoining support walls of this recess.

5. Lighting device (1) according to one of the preceding claims, in which each of said vertical guide members (55, 56) of the plate (2) comprises a recess formed in the plate and provided with two opposing support walls (55a, 55b, 56a, 56b) and wherein each of said vertical positioning members (65, 66) comprises a lug extending from the housing (3) into the recess of a vertical guide member such that, in the rest position of the housing, a peripheral surface of said lug is in contact with the opposite support walls of said recess.

6. Lighting device (1) according to one of the preceding claims, in which the plate (2) comprises at least one stop (8) mounted opposite one of the guide members (51, 52, 53, 54, 55, 56) and in which the or each elastically deformable member (7) comprises a spring fixed to one of the positioning members (61, 62, 63, 64, 65, 66) and cooperating with the or one of said stops on the plate.

7. Lighting device (1) according to the preceding claim, in which the spring comprises a torsion spring (71) wound around said positioning member (61, 62, 63, 64, 65, 66) and two arms (72, 73) each extending from one of the legs of said torsion spring, each arm coming into contact with a side face of the stop (8).

8. Vehicle comprising a lighting device (1) according to any of the preceding claims, the plate (2) being secured by said securing members to the vehicle chassis and/or to the vehicle bodywork.
